# DEMANDE DE BREVET EUROPEEN

(11) **EP 3 995 305 A1**
(43) Date de publication de la demande: **11.05.2022**
(21) Numéro de dépôt: 21203521.6
(22) Date de dépôt: 19.10.2021
(51) Int. Cl.: B32B 3/06, B32B 5/02, B32B 5/16, B32B 7/12, B32B 9/02, B32B 9/04, B32B 21/02, B32B 21/08, B32B 27/08, B32B 27/10, B32B 27/12, B32B 27/16, B32B 27/30, B32B 27/32, B32B 27/34, B32B 27/36, B32B 27/42

(54) **STRUCTURE MULTICOUCHE POUR LA REALISATION D'UN REVETEMENT DE SOL OU DE MUR IMPRIME ET A BASE DE LINOLEUM**

(30) Priorité: 05.11.2020 FR 2011370
(71) Demandeur: GERFLOR, 69100 Villeurbanne (FR)
(72) Inventeur: FERLAY, Charles, 69770 MONTROTTIER (FR)
(74) Mandataire: Cabinet Laurent & Charras

(57) **Abrégé**

L'invention concerne une structure multicouche (1) pour la réalisation d'un revêtement de sol ou de mur comprenant une couche d'envers (2) à base de linoléum renforcée par une armature de renfort (3), une couche d'usure (4) liée à la couche d'envers (2), et une couche d'impression décor (5) positionnée entre la couche d'usure (4) et la couche d'envers (2).

Selon l'invention, la couche d'usure (4) est en PET, TPU, PP, PETG, ou en ionomère et est transparente au moins à la lumière du domaine du visible.

## Description

### Domaine technique

La présente invention concerne une structure multicouche pour la réalisation d'un revêtement de sol ou de mur, imprimé d'un décor et à base de linoléum.

La présente invention trouve une application avantageuse dans la réalisation de revêtements de sol ou de mur à base de linoléum et à pose libre, par exemple présentés sous forme de rouleaux, de dalles ou de lames.

### Art antérieur

Dans le domaine de la présente invention, il est connu de réaliser une structure multicouche pour la réalisation d'un revêtement de sol ou de mur, présentant un décor en impression numérique sur une couche d'envers à base de linoléum.

Par exemple, il est connu une structure multicouche comprenant :
- une couche d'envers à base de linoléum laquelle est supportée par une armature de renfort, telle qu'une toile de jute ou une grille tissée en polyester, destinée à être en contact avec le sol ou le mur ;
- une couche de primaire d'accrochage positionnée sur la couche d'envers ;
- une couche d'impression décor, telle qu'une couche d'impression numérique, déposée sur la couche de primaire d'accrochage ;
- une couche d'usure en polyuréthane réticulé positionnée sur la couche d'impression décor.

En pratique, la couche d'envers à base de linoléum peut comprendre deux couches liées ensemble, à savoir une couche supérieure en linoléum dite « noble » et une couche inférieure en linoléum recyclé.

Pendant la fabrication, la couche noble et la couche contenant du linoléum recyclé sont calandrées ensemble sur l'armature de renfort avant d'être réticulées dans un four à 80 °C pendant plus de 30 jours.

L'inconvénient de ce type de structure multicouche est que la résistance à l'abrasion de la couche d'usure en polyuréthane réticulé n'est pas suffisante. En effet, des tests d'abrasion montrent une usure trop rapide pour des structures multicouches soumises à des trafics moyens. En particulier, le décor disparaît après 550 cycles d'une machine d'essai d'abrasion et d'usure connue sous le nom TABER (Marque déposée) selon la norme NF EN 16511+A1.

Le document EP 2 723 561 prévoit de réaliser cette couche d'usure en polyuréthane réticulé par scellage à chaud et intégrant des particules inorganiques. Ce type de couche par scellage à chaud est notamment connue de l'homme du métier sous le nom anglais « hotcoating » et est appliquée de préférence avec une épaisseur comprise entre 50 et 150 µm, et chargée avec une charge permettant la résistance à l'abrasion, telle que par exemple une charge de type alumine.

Une couche d'usure en polyuréthane réticulé est plus résistante lorsqu'elle est obtenue à partir d'une couche de scellage à chaud. Cependant, cette couche d'usure rajoute des contraintes mécaniques en surface du revêtement qui peuvent entraîner une forte incurvation de celui-ci lorsqu'il se présente sous la forme d'une lame. De plus, ce type de couche d'usure peut être cassant s'il est soumis à des chocs importants. D'autre part, le procédé de fabrication d'une structure multicouche comprenant une telle couche d'usure est long et coûteux.

Par ailleurs, selon l'une ou l'autre des structures multicouches décrites ci-avant, il n'est pas possible de grainer la couche d'usure après réticulation, ce qui rend les produits obtenus moins réalistes ou plus complexe à réaliser.

### Exposé de l'invention

L'un des buts de l'invention est donc de remédier aux problèmes précités en fournissant une structure multicouche pour la réalisation d'un revêtement de sol ou de mur à base de linoléum imprimé avec un décor, qui présente une résistance suffisante en termes d'abrasion, c'est-à-dire qui satisfait les tests de la norme NF EN 16511+A1, tout en évitant les problèmes d'incurvation du revêtement lorsqu'il se présente sous forme de lames ou de dalles.

Un autre objectif de l'invention est de fournir une structure multicouche, de préférence dépourvue de polychlorure de vinyle, et dont le procédé de fabrication est facilité et moins onéreux que celui de l'art antérieur.

Un autre objectif de mention est de fournir une structure multicouche comprenant un décor plus réaliste que celui de l'art antérieur.

A cet effet, il a été mis au point une structure multicouche pour la réalisation d'un revêtement de sol ou de mur comprenant une couche d'envers à base de linoléum renforcée par une armature de renfort, une couche d'usure liée à la couche d'envers, et une couche d'impression décor positionnée entre la couche d'usure et la couche d'envers.

Selon l'invention, la couche d'usure est en polytéréphtalate d'éthylène (PET), polyuréthane thermoplastique (TPU), de préférence aliphatique, polypropylène (PP), ou polytéréphtalate d'éthylène glycol (PETG), ou en ionomère et est transparente au moins à la lumière du domaine du visible.

De cette manière, l'invention permet de fournir une structure multicouche pour la réalisation d'un revêtement de sol ou de mur, qui présente une résistance suffisante en termes d'abrasion, en satisfaisant notamment la norme NF EN 16511+A1, tout en diminuant, voire en supprimant les problèmes d'incurvation du revêtement lorsqu'il se présente sous la forme de lame et en rendant la structure multicouche moins cassante. L'utilisation d'une telle couche décor améliore également la stabilité dimensionnelle de la structure multicouche.

Le procédé de fabrication de la structure multicouche peut également être facilité et est moins couteux, puisque la couche d'impression décor peut être imprimée, de préférence avec une machine d'impression numérique, sur une face inférieure de la couche d'usure ou sur une face supérieure de la couche d'envers.

Ainsi, la couche d'impression décor peut être imprimée séparément sur une face inférieure de la couche d'usure puis liée ensuite à la couche d'envers. Cela permet de faciliter le procédé, apporte plus de flexibilité et réduit les coûts. En effet, l'obtention d'une couche d'envers est assez long, notamment supérieur à 30 jours, et se fait par campagne. Il est donc plus simple de réaliser séparément une couche d'envers et une couche d'usure présentant le décor et de les lier à façon. La structure multicouche peut être fabriquée en rouleau puis découpée en lames ou en dalles.

Par ailleurs, la couche d'usure mise en œuvre dans la structure multicouche selon l'invention peut être grainée et/ou chanfreinée, rendant ainsi le décor plus réaliste.

Selon une forme de réalisation particulière, la couche d'usure est liée à la couche d'envers par laminage à chaud, en fonction de la compatibilité chimique des deux matières à associer.

Selon une autre forme de réalisation, la couche d'usure est liée à la couche d'envers par l'intermédiaire d'une couche de liaison, éventuellement transparente au moins à la lumière du domaine du visible, telle qu'une couche de colle, par exemple thermofusible connue sous le nom anglais « hotmelt » par exemple en copolyester ou en polyuréthane réticulé, ou bien un film thermofusible, une grille thermofusible ou un voile thermofusible par exemple non tissé, de copolyester ou de copolyamide.

Dans le cas d'une couche de liaison sous la forme d'un film thermofusible, ledit film thermofusible peut être soit monocouche, par exemple en éthylène-acétate de vinyle (EVA), polyuréthane thermoplastique (TPU), copolyamide, polyester, copolyester, ou bien bicouche, tels que qu'un film co-extrudé composé d'une couche de copolyamide et d'une couche de polyoléfine.

Il est évident que, lorsqu'une couche de liaison est utilisée et que la couche d'impression décor est imprimée sur la face supérieure de la couche d'envers, ladite couche de liaison doit être transparente au moins à la lumière du domaine du visible pour ne pas masquer la couche d'impression décor.

Avantageusement et afin de faciliter le procédé de fabrication de la structure multicouche selon l'invention, la couche d'impression décor est de préférence imprimée par une machine d'impression numérique, et est une couche d'encre à base aqueuse, ou d'encre UV, notamment à réticuler sous ultraviolet.

De préférence, la couche d'impression décor est positionnée, et notamment imprimée sur une couche d'encre blanche, qui permet d'unifier le décor, ainsi que de faciliter la reproductibilité des couleurs du décor. Dans certains cas, notamment si une couche d'encre blanche est impossible à imprimer, la couche d'envers pourra être revêtue d'un primaire d'accrochage blanc aqueux (séchage en température) ou d'un primaire d'accrochage blanc à séchage UV avant impression de la couche décor. Le primaire d'accrochage peut être de type polyuréthane ou acrylique.

Selon une forme de réalisation particulière, la structure multicouche comprend une couche support en polypropylène ou en papier imprégné d'un liant tel que de la résine mélamine formaldéhyde ou urée formaldéhyde, disposé entre la couche d'usure et la couche de liaison.

Dans cette forme de réalisation, la couche d'impression décor peut alors être imprimée soit sur la face inférieure de la couche d'usure, soit directement sur une face supérieure de la couche support en polypropylène ou papier imprégné.

Dans cette forme de réalisation, la couche de liaison peut être un film thermofusible bicouche comprenant une couche supérieure en polyoléfine, en raison de sa bonne affinité avec le polypropylène, et une couche inférieure en copolyamide, en raison de sa bonne affinité avec le linoléum, ou une couche thermofusible, par exemple en polyuréthane réticulé, en raison de sa bonne affinité avec le papier et le linoléum.

L'armature de renfort peut être disposée sur une face inférieure ou supérieure de la couche d'envers, et se présente par exemple sous la forme d'une toile de jute, d'une armature à base de papier, d'un non-tissé ou d'une grille tissée en polyester. L'intérêt de positionner l'armature de renfort sur une face supérieure de la couche d'envers est que cela permet d'améliorer la stabilité dimensionnelle et de limiter, voire de supprimer le phénomène d'incurvation de la structure multicouche. Selon une variante, la structure multicouche comprend deux armatures de renfort, positionnées de part et d'autre de la couche d'envers.

De préférence, et dans le but de rendre le revêtement plus réaliste, en fonction du décor désiré, la face supérieure de la couche d'usure est chanfreinée et/ou grainée.

En variante, et afin de proposer un sol en dalle ou en lame à pose libre, sans colle, sur le sol, la couche d'envers peut être liée, par l'intermédiaire d'une couche de liaison, à une sous-couche comprenant des moyens mâles-femelles de liaison ou d'assemblage. La couche de liaison peut être une couche de colle thermofusible, ou un film thermofusible.

L'invention concerne également un procédé de fabrication d'une telle structure multicouche remarquable en ce que la couche d'impression décor est réalisée par impression numérique sur une face inférieure de la couche d'usure ou sur une face supérieure de la couche d'envers.

### Description des figures

[Fig. 1] la figure 1 est une représentation schématique d'une structure multicouche selon une première variante de l'invention.
[Fig. 2] la figure 2 est une représentation schématique d'une structure multicouche selon une deuxième variante de l'invention.
[Fig. 3] la figure 3 est une représentation schématique d'une structure multicouche selon une troisième variante de l'invention.
[Fig. 4] la figure 4 est une représentation schématique d'une structure multicouche selon une quatrième variante de l'invention.
[Fig. 5] la figure 5 est une représentation schématique d'une structure multicouche selon une cinquième variante de l'invention.
[Fig. 6] la figure 6 est une représentation schématique d'une structure multicouche selon une sixième variante de l'invention.
[Fig. 7] la figure 7 est une représentation schématique d'une structure multicouche selon une septième variante de l'invention.

### Description détaillée de l'invention

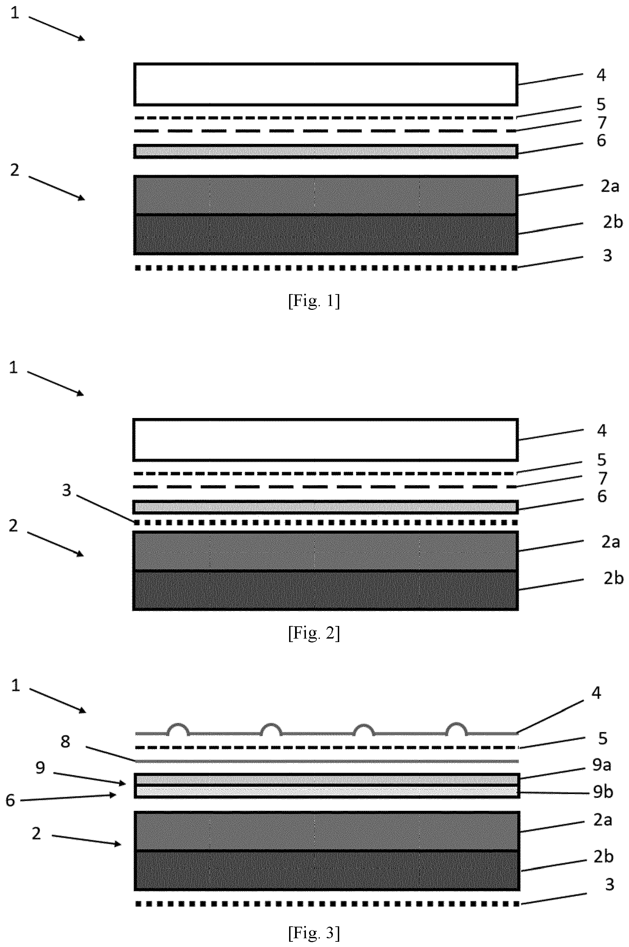

En référence aux figures 1 à 7, l'invention concerne une structure multicouche (1) pour la réalisation d'un revêtement de sol ou de mur à base de linoléum, avec une couche d'impression décor, de préférence obtenue par impression numérique, dépourvue de PVC, qui résiste aux tests en vigueur d'abrasion et dans lequel les phénomènes d'incurvation sont limités, voire évités.

À cet effet, la structure multicouche (1) comprend, d'une manière classique, une couche d'envers (2) à base de linoléum pouvant comprendre deux couches, à savoir une couche supérieure (2a) dite « noble » et une couche inférieure (2b) contenant du linoléum recyclé. La couche d'envers (2) présente par exemple une épaisseur comprise entre 1,3 et 3 mm et de préférence comprise entre 1,8 et 2,2 mm. La couche d'envers (2) est renforcée par une armature de renfort (3) qui peut être une toile de jute, une armature à base de papier, un non-tissé ou une grille tissée en polyester, par exemple. Les couches nobles (2a) et recyclées (2b) de la couche d'envers (2) sont, par exemple, calandrées ensemble sur l'armature de renfort (3) avant d'être réticulées dans un four, par exemple à 80°C pendant plus de 30 jours. La couche d'envers (2) présente par exemple une épaisseur comprise entre 1,5 et 3 mm.

L'invention consiste ensuite à apporter une couche d'usure (4), transparente à la lumière du domaine visible, dépourvue de PVC, notamment réalisée en PET, TPU de préférence aliphatique, PP, PETG ou en ionomère, et à la lier à la couche d'envers (2), en positionnant préalablement une couche d'impression décor (5) entre la couche d'usure (4) et la couche d'envers (2). Par exemple, la couche d'impression décor (5) présente une épaisseur comprise entre 4 et 300 µm et peut être imprimée sur une face inférieure de la couche d'usure (4) ou sur une face supérieure de la couche d'envers (2). La couche d'usure (4) comprend par exemple, une densité comprise entre 0,9 et 1,4, et de préférence comprise entre 1,15 et 1,25 et une épaisseur comprise entre 50 et 600 µm, et de préférence comprise entre 200 et 500 µm.

Plusieurs solutions sont possibles pour lier la couche d'usure (4) à la couche d'envers (2) à base de linoléum. Par exemple, les deux couches peuvent être laminées ensemble et à chaud de manière à obtenir une fusion des matériaux à l'interface des deux couches ou bien peuvent être liées par l'intermédiaire d'une couche de liaison (6), éventuellement transparente à la lumière du domaine du visible, telle qu'une couche de colle thermofusible un film thermofusible, une grille thermofusible ou un voile thermofusible par exemple un non-tissé, de copolyester ou de copolyamide.

Le film thermofusible comprend par exemple une masse surfacique de 20 à 300 g/m² et peut être monocouche, par exemple en EVA, TPU, copolyamide, polyester ou copolyester, ou un film thermofusible bi-couche, par exemple co-extrudé, composé d'une couche de copolyamide et d'une couche de polyoléfine.

La grille thermofusible ou le voile thermofusible par exemple non-tissé, de copolyester ou de copolyamide comprend par exemple une masse surfacique de 5 à 100g/m2.

La couche d'impression décor (5) est de préférence imprimée par une machine d'impression numérique, et peut-être une couche d'encre à base aqueuse ou d'encre UV à faire réticuler sous ultraviolets, imprimée éventuellement sur une couche d'encre blanche (7) afin d'unifier et d'améliorer la reproductibilité des couleurs du décor.

La couche d'usure (4) peut être vernie pour lui conférer des bonnes propriétés de surface, notamment brillance, résistance à l'encrassement et glissance, avec un vernis, par exemple acrylique ou polyuréthane, d'une épaisseur généralement comprise entre 7 et 30µm.

À partir du concept à la base de l'invention, plusieurs formes de réalisation peuvent être envisagées.

Par exemple, la référence à la figure 1, une couche d'impression décor (5) peut être imprimée sur une face inférieure d'une couche d'usure (4) en PET, TPU, PP, ionomère ou PETG.

Par-dessus la couche d'impression décor (5), on imprime ensuite, de manière optionnelle, et de préférence aussi avec un machine d'impression numérique, une couche d'encre blanche (7), d'épaisseur de l'ordre de 5 à 10 µm.

La couche d'usure (4) est ensuite retournée et liée, c'est-à-dire laminée à chaud ou par l'intermédiaire d'une couche de liaison (6), avec une couche d'envers (2) à base de linoléum naturel, ou bien composée d'une couche supérieure (2a) en linoléum dit « noble » et une couche inférieure (2b) de linoléum recyclé, supportée par une armature de renfort (3), telle qu'une toile de jute, une armature à base de papier, un non-tissé, ou une grille tissée en polyester, destiné à être en contact avec le sol ou le mur à recouvrir.

La couche de liaison (6) peut être un primaire d'accrochage, une couche de colle thermofusible, ou un film thermofusible.

En variante, et selon la figure 2, la couche d'armature de renfort (3) peut être positionnée entre la couche de liaison (6) et la face supérieure de la couche d'envers (2), afin de limiter, voire supprimer le phénomène d'incurvation.

En variante et selon la figure 3, la structure multicouche (1) comprend une couche support (8), par exemple d'épaisseur comprise en 70 et 150 µm, en polypropylène ou en papier imprégné d'un liant tel que de la résine mélamine formaldéhyde ou urée formaldéhyde, positionnée entre la couche d'usure (4) et la couche de liaison (6). Plus précisément, la couche d'usure (4), la couche d'impression décor (5) et la couche support (8) forment un complexe, lequel complexe est lié à la couche d'envers (2) par la couche de liaison (6). Lors de la fabrication du complexe, la couche d'impression décor (5) peut être imprimée sur la face inférieure de la couche d'usure (4), ou bien imprimée sur une face supérieure de la couche support (8).

Par exemple, le complexe peut comprendre une couche support (8) en papier pré-imprimé d'une couche d'impression décor (5) puis lié par laminage à chaud avec une couche d'usure (4) en polypropylène. La couche d'usure (4) est ensuite vernie.

Dans cet exemple, la couche de liaison (6) se présente avantageusement sous la forme d'une colle thermofusible, par exemple en polyuréthane réticulé, la dépose de la colle étant éventuellement précédée d'un prétraitement de type corona ou plasma de la surface de la couche d'envers (2) afin d'améliorer son adhérence.

Dans un autre exemple, le complexe peut comprendre une couche support (8) en polypropylène imprimé d'une couche d'impression décor (5) puis lié par laminage à chaud avec une couche d'usure (4) en polypropylène. La couche d'usure (4) est ensuite vernie.

Dans cet exemple, la couche de liaison (6) se présente avantageusement sous la forme d'un film thermofusible bicouche (9) comprenant une couche supérieure (9a) en polyoléfine, en raison de sa bonne affinité avec le polypropylène, et une couche inférieure (9b) en copolyamide, en raison de sa bonne affinité avec le linoléum de la couche d'envers (2).

La couche d'envers (2) est similaire à celle représentée sur la figure 1, avec l'armature de renfort (3) positionnée sur la face inférieure de la couche d'envers (2) pour être en contact avec le sol ou le mur à recouvrir.

Dans les exemples des figures 2 et 3, la couche d'impression décor (5) peut être imprimée avec des encres aqueuses par héliogravure. La couche d'usure (4), par exemple une couche obtenue à partir d'un ionomère type Surlyn c'est-à-dire en copolymère d'éthylène avec un monomère de vinyle (acide méthacrylique), comprend par exemple une épaisseur de l'ordre de 300 µm et est grainée. Le complexe formé par la couche d'usure (4), la couche d'impression décor (5) et la couche support (8) comprend une épaisseur totale comprise entre 170 µm et 420 µm suivant la classe d'usure désirée.

La couche de liaison (6), qui peut notamment être un film thermofusible bicouche (9) en polyoléfine (9a) /copolyamide (9b) possède par exemple un poids compris entre 24 et 95 g/m² et permet d'assembler le complexe avec la couche d'envers (2).

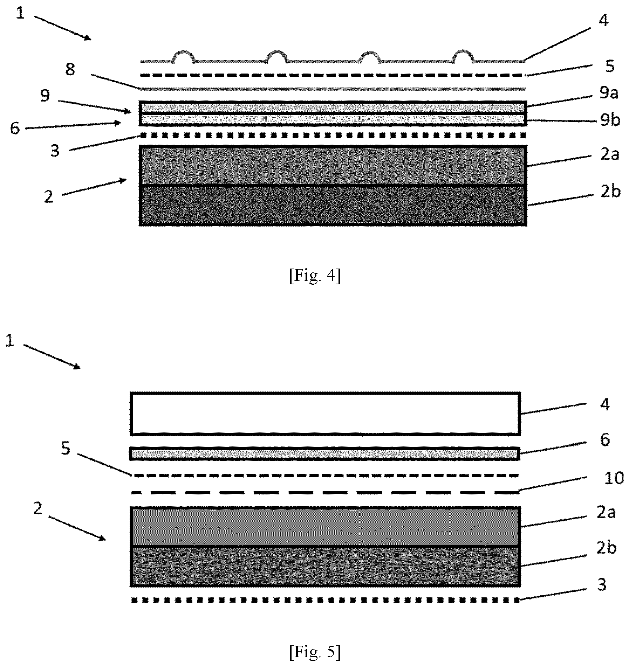

En variante, et en référence à la figure 4, l'armature de renfort (3) peut être positionnée entre la couche de liaison (6) et la couche d'envers (2) afin de diminuer, voire de supprimer le phénomène d'incurvation.

Selon une autre variante de fabrication, illustrée à la figure 5, l'invention consiste à imprimer directement la couche d'impression décor (5) sur une couche supérieure de la couche d'envers (2) à base de linoléum.

La structure multicouche (1) comprend alors, du sol ou du mur vers la surface :
- une armature de renfort (3) ;
- une couche d'envers (2) à base de linoléum ;
- une couche d'impression décor (5) imprimée sur une face supérieure de la couche d'envers (2) ou éventuellement sur un primaire d'accrochage (10) de type polyuréthane ou acrylique déposé sur la face supérieure de la couche d'envers (2) ;

- une couche de liaison (6), notamment transparente à la lumière du domaine du visible, telle qu'un autre primaire d'accrochage, une colle thermofusible, un film thermofusible ;
- une couche d'usure (4) positionnée sur la couche de liaison (6).

Bien entendu, et comme évoqué précédemment, la couche de liaison (6) est optionnelle si les couches d'usure (4) et d'envers (2) sont laminées ensemble et à chaud.

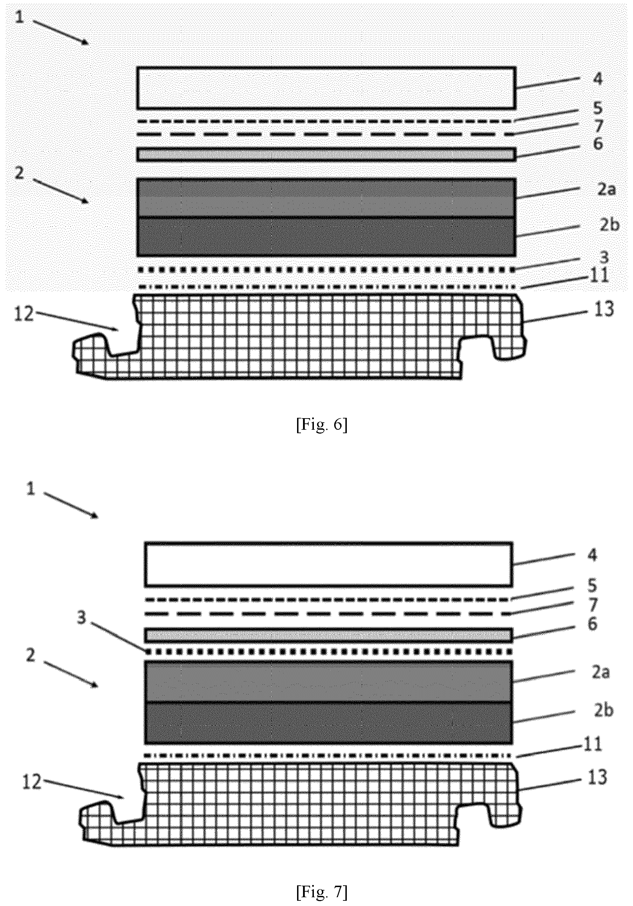

En variante, et en référence aux figures 6 et 7, la couche d'envers (3) peut être liée, par l'intermédiaire d'une couche de liaison (11), à une sous-couche (12) comprenant des moyens mâles-femelles de liaison ou d'assemblage (13). La couche de liaison (11) peut être une couche de colle thermofusible, ou un film thermofusible. La couche d'envers (2) ainsi que les couches (3), (4), (5) et (6) sont similaires à celles représentées sur la figure 1. Bien entendu, ces couches peuvent être remplacées par les différentes couches présentées sur les figures 3 à 5 afin de présenter une couche décor (5) et une couche d'usure (4). La structure multicouche (1) se présente alors sous la forme de dalles ou de lames pouvant facilement être assemblées sur le sol ou mur à recouvrir et de préférence sans colle.

La sous-couche (12) peut être monocouche ou multicouche et réalisée par exemple à partir de matière plastique telle que du polypropylène, du polyuréthane, du polyuréthane thermoplastique, du polyéthylène, du polyéthylène téréphtalate, ou toute autre matière plastique appropriée, et comprenant éventuellement des charges sous forme de fibres, copeaux, poussières ou sciure de bois et/ou des charges minérales, par exemple craie, chaux, talc, et un ou plusieurs plastifiants afin de définir la rigidité la sous-couche (12). De façon préférentielle, la sous-couche (12) ne comprend pas de polychlorure de vinyle.

La sous-couche (12), ou une des couches de la sous-couche (12) dans le cas d'un sous-couche (12) multicouche, peut éventuellement être à base de résine mélamine formaldéhyde ou urée formaldéhyde et de bois, par exemple des couches de fibres de densité moyenne (MDF) ou de fibres de densité Haute (HDF). Chaque couche de la sous-couche (12) peut également être une couche de bois stratifié, de bois composite (WPC « wood plastic composite » en langue anglaise).

Les moyens mâles-femelles de liaison ou d'assemblage (13) de panneaux sont notamment décrits dans les documents GB 2 256 023, EP 1 026 341, WO 2012/004701, EP 2 843 153 ou encore WO 2016/030627.

Selon la variante présentée sur la figure 6, l'armature de renfort (3) est positionnée sur la face inférieure de la couche d'envers (2) pour être en contact avec la couche de liaison (11).

Selon la variante présentée sur la figure 7, l'armature de renfort (3) est positionnée entre la couche de liaison (6) et la face supérieure de la couche d'envers (2), afin de limiter, voire supprimer le phénomène d'incurvation.

## Revendications

1. Structure multicouche (1) pour la réalisation d'un revêtement de sol ou de mur comprenant une couche d'envers (2) à base de linoléum renforcée par une armature de renfort (3), une couche d'usure (4) liée à la couche d'envers (2), et une couche d'impression décor (5) positionnée entre la couche d'usure (4) et la couche d'envers (2) **caractérisée en ce que** la couche d'usure (4) est en PET, TPU, PP, PETG ou en ionomère, et est transparente au moins à la lumière du domaine du visible.

2. Structure multicouche (1) selon la revendication 1, **caractérisée en ce que** la couche d'usure (4) est liée à la couche d'envers (2) par l'intermédiaire d'une couche de liaison (6) telle qu'une couche de colle thermofusible, un film thermofusible, une grille thermofusible ou un voile thermofusible par exemple non tissé, de copolyester ou de copolyamide.

3. Structure multicouche (1) selon la revendication 2, **caractérisée en ce que** la couche de liaison (6) est un film thermofusible monocouche en EVA, TPU, copolyamide, Polyester ou copolyester, ou un film thermofusible bi-couche (9), par exemple co-extrudé, composé de copolyamide et de polyoléfine.

4. Structure multicouche (1) selon la revendication 1, **caractérisée en ce que** la couche d'impression décor (5) est une couche d'encre à base aqueuse ou d'encre UV.

5. Structure multicouche (1) selon la revendication 1, **caractérisée en ce que** la couche d'impression décor (5) est positionnée sur une couche d'encre blanche (7).

6. Structure multicouche (1) selon la revendication 3, **caractérisée en ce qu'**elle comprend une couche support (8), en polypropylène ou en papier imprégné d'un liant, disposée entre la couche d'usure (4) et la couche de liaison (6).

7. Structure multicouche (1) selon la revendication 6, **caractérisée en ce que** la couche de liaison (6) est un film thermofusible bicouche (9) comprenant une couche supérieure (9a) en polyoléfine et une couche inférieure (9b) en copolyamide.

8. Structure multicouche (1) selon la revendication 1, **caractérisée en ce que** l'armature de renfort (3) est disposée sur une face inférieure et/ou supérieure de la couche d'envers (2).

9. Structure multicouche (1) selon la revendication 1, **caractérisée en ce que** la face supérieure de la couche d'usure (4) est chanfreinée et/ou grainée.

10. Procédé de fabrication d'une structure multicouche (1) selon la revendication 1, **caractérisé en ce que** la couche d'impression décor (5) est réalisée par impression numérique sur une face inférieure de la couche d'usure (4) ou sur une face supérieure de la couche d'envers (2).
